## Europäisches Patentamt
## European Patent Office
## Office européen des brevets

(19)

(11) Veröffentlichungsnummer: **0 048 852**
**B2**

(12) **NEUE EUROPÄISCHE PATENTSCHRIFT**

(45) Veröffentlichungstag der neuen Patentschrift:
**08.08.90**

(21) Anmeldenummer: **81107133.1**

(22) Anmeldetag: **10.09.81**

(51) Int. Cl.⁵: **H 01 H 3/14, H 01 H 9/16, H 01 H 13/16, H 01 H 35/24**

(54) Fussschaltpult.

(30) Priorität: **30.09.80 DE 3036798**

(43) Veröffentlichungstag der Anmeldung:
**07.04.82 Patentblatt 82/14**

(45) Bekanntmachung des Hinweises auf die
Patenterteilung:
**07.08.85 Patenblatt 85/32**

(45) Bekanntmachung des Hinweises auf die
Entscheidung über den Einspruch:
**08.08.90 Patentblatt 90/32**

(84) Benannte Vertragsstaaten:
**CH DE FR GB LI**

(56) Entgegenhaltungen:
**DE-A-1 491 094**    **US-A-2 482 550**
**DE-A-2 360 413**    **US-A-3 688 126**
**DE-A-2 842 622**    **US-A-3 906 369**
**DE-A-2 950 550**    **US-A-4 045 630**
**DE-B-2 530 108**

(73) Patentinhaber: **Firma Carl Zeiss
D-7920 Heidenheim (Brenz) (DE)**

(72) Erfinder: **Lang, Walter, Dr.
Finkenweg 33
D-7923 Königsbronn (DE)**
Erfinder: **Schmauder, Roland, Labor-Ing. grad.
Am Haselstrauch 1
D-7082 Oberkochen (DE)**

(56) Entgegenhaltungen:
**FIRMENDRUCKSCHRIFT : Bedienungsanleitung
AEG Standbügler H 245 248 500 - 0167 -
Patent Abstracts of Japan Band 4, Nr. 134, 19
September 1980 Seite 155P28**

**Die Akte enthält technische Angaben, die nach
dem Eingang der Anmeldung eingereicht
wurden und die nicht in dieser Patentschrift
enthalten sind.**

Courier Press, Leamington Spa, England.

EP 0 048 852 B2

## Beschreibung

Die Erfindung betrifft ein Fußschaltpult, vorzugsweise für Operationsmikroskope, mit einem oder mehreren Fußschaltern zum Betätigen zahlreicher Funktionen, von denen mindestens mehrere in ihren jeweiligen Zuständen gleichzeitig notwendig sind.

Bei Verwendung eines Operationsmikroskopes kommt der Operateur nicht umhin, während eines mikrochirurgischen Eingriffes bestimmte Einstellungen des Mikroskopes zu verändern. Dies betrifft z.B. die Höheneinstellung des Mikroskopes, seine Fokussierung, die Mikroskopvergrößerung oder die Beleuchtungsstärke des OP-Feldes. Es kommen auch Zusatzgeräte in Betracht, wie z.B. die in der Ophthalmologie gebrauchte durchschwenkbare Spaltleuchte, und schließlich sind auch andere Geräte, wie z.B. Bohrer, Motortrepan, Glühkauter oder auch Photo- und Filmeinrichtungen zu bedienen.

Die genannten Einstellungen sowie die Inbetriebnahme der Geräte werden bevorzugt mit Fußschaltern ausgeführt, da der Operateur z.B. mit einer Hand den Absauger hält und mit der anderen Hand ein mikrochirurgisches Instrument wie beispielsweise eine Pinzette führen muß. Wie aus der vorigen Aufstellung hervorgeht, kann es vorkommen, daß bei aufwendigen mikrochirurgischen Ausrüstungen mehr als ein halbes Dutzend Fußschalter betätigt werden müssen. Dies bedeutet einerseits einen erheblichen Aufwand an Schaltmitteln, zumal jeder einzelne Schalter zumindest spritzwassergeschützt sein muß. Zum anderen wird der Platzbedarf mit jedem weiteren Schalter größer. Und schließlich haben bekannte Fußschaltpulte für beispielsweise 12 Funktionen den Nachteil, daß maximal nur 12 Funktionen geschaltet werden können; sie lassen sich schon aus räumlichen Gründen im allgemeinen bei weiterem Bedarf an Funktionen nicht ausbauen.

Der schwerwiegendste Nachteil im praktischen Gebrauch bei bekannten Fußschaltpulten für mehrere Funktionen besteht jedoch darin, daß die Fußschaltpulte unvermeidlicherweise unter dem Operationstisch angeordnet sind. Sie entziehen sich also dem Blick des Operateurs, zumal wenn die sterilen Abdecktücher vom Operationstisch tief nach unten hängen und das Fußschaltpult verdecken. In einem solchen Fall muß dann der Operateur mitunter erst durch Probieren herausfinden, welcher von den vielen Schaltern die gewünschte Funktion liefert. Dadurch wird kostbare Zeit vergeudet, was in kritischen Phasen einer Operation unzumutbar ist.

Aus der DE—A—1 491 094 ist eine Vorrichtung zur Drehzahleinstellung bei zahnärztlichen Bohrmaschinen bekannt, bei der für jede Drehzahleinstellung ein eigener Momenttaster in einem Fußtastenschaltsatz vorgesehen ist. Für die Einstellung der Drehrichtung sind zwei weitere Betätigungsglieder am Fußtastenschaltsatz vorgesehen.

Aus der DE—A1—2 360 413 ist ein Dentalarbeitsplatz bekannt, bei dem ein Fußregler abwechselnd für ein rotierendes und ein oszillierendes Werkzeug verwendet wird. Die Umschaltung erfolgt dabei automatisch, wenn das oszillierende Werkzeug aus dem Gerät entnommen wird, bzw. wenn es dort abgelegt wird. Dabei wird immer nur eines der beiden Werkzeuge benutzt, das andere wird während dieser Zeit nicht gebraucht und erfüllt keine Funktion.

Im Gegensatz dazu sind bei einem Operationsmikroskop verschiedene Einstellungen, wie z.B. Höhe, Fokussierung, Vergrößerung etc., gleichzeitig notwendig. Sie werden abwechselnd, verändert, müssen aber nach ihrer Betätigung erhalten bleiben und jederzeit wieder verändert werden können.

Der Erfindung liegt daher die Aufgabe zugrunde, ein Fußschaltpult zu schaffen, das mit einem oder wenigen Fußschaltern eine schnelle und sichere Bedienung von zahlreichen Funktionen ermöglicht, von denen mindestens mehrere in ihren jeweiligen Zuständen gleichzeitig notwendig sind.

Erfindungsgemäß wird die gestellte Aufgabe einerseits gelöst durch eine Umschalteinrichtung, mit der die Funktionen des Fußschalters bzw. der Fußschalter vorwählbar sind, und durch Leuchtanzeigen, die anzeigen, welche Funktion vorgewählt ist bzw. welche Funktionen vorgewählt sind.

In einer Ausführungsform der Erfindung wird nur ein Fußschalter, vorzugsweise ein Wippschalter, verwendet, der wahlweise auf die gerade erforderliche Funktion fernbedient umgeschaltet wird. Zu diesem Zweck ist ein Steuerpult vorgesehen mit einer Anzahl von Wahltasten, welche sinnfällige kurze Bezeichnungen wie zum Beispiel Fokus, Lampe oder ähnliches tragen. Durch Zuruf des Operateurs wird etwa von der Instrumentenschwester die gewünschte Funktion gewählt, so daß bei Betätigen des Fußschalters eine Änderung der betreffenden Funktion erfolgt. Je nach Auslegung der Elektrik beziehungsweise Elektronik läßt sich auf diese Weise jede gewünschte Anzahl von Funktionen mit einem einzigen Fußschalter bedienen.

Für bestimmte Anwendungsfälle kann es vorteilhaft sein, zwei Fußschalter zu verwenden. Dieser Fall liegt z.B. vor, wenn eine sogenannte XY-Kupplung verwendet wird, also eine Kupplung, welche der translatorischen Verstellung des Mikroskopes in zwei zueinander senkrechten Achsen dient. In einer weiteren Ausführungsform hat daher das Fußschaltpult zwei Fußschalter, bei denen im Interesse einer sinnfälligen Betätigung der Wippschalter für die Y-Achse gegenüber dem anderen Wippschalter um 90° gedreht angeordnet ist. Diese Ausführungsform ist auch für andere Anwendungen geeignet, bei denen häufig zwischen zwei Funktionen gewechselt werden muß.

Andererseits wird die gestellte Aufgabe gelöst durch eine Umschalteinrichtung, mit der die Funktionen des Fußschalters bzw. der Fußschalter vorwählbar sind, und durch einen Sprachanalysator, der auf gesprochene Kommandowörter anspricht und der mit der Umschalteinrichtung verbunden ist.

Weitere Ausgestaltungen der Erfindung ergeben sich aus den abhängigen Ansprüchen.

Die Erfindung wird im folgenden anhand der Figuren 1 bis 4 der Zeichnungen näher erläutert. Im einzelnen zeigt:

Fig. 1 ein Blockschaltbild einer Ausführungsform mit einem Fußschalter,

Fig. 2 ein Blockschaltbild einer Ausführungsform mit zwei Fußschaltern;

Fig. 3 ein Blockschaltbild einer Ausführungsform mit drei Fußschaltern und

Fig. 4 eine Schaltskizze einer Ausführungsform mit zwei Fußschaltern.

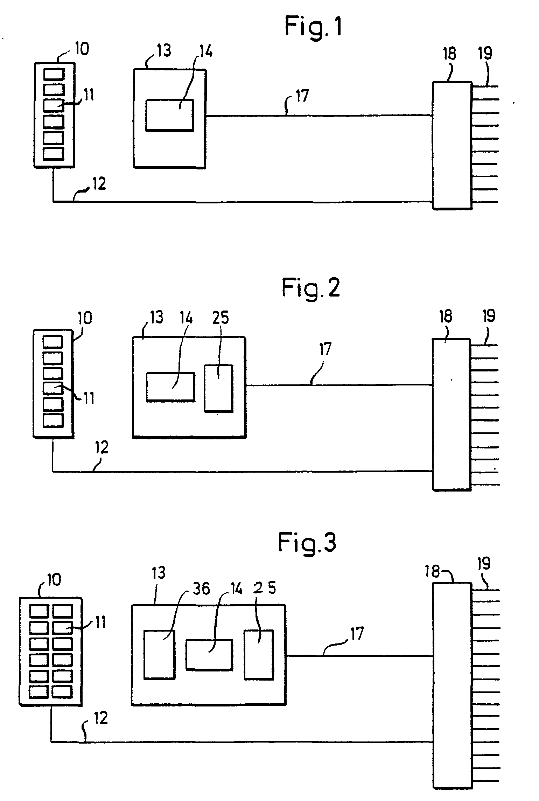

In Fig. 1 ist mit 13 das Fußschaltpult bezeichnet, das in dieser Ausführungsform nur einen Fußschalter 14 enthält. Der Fußschalter 14 ist vorzugsweise als Wippschalter ausgebildet; in diesem Fall bewirkt der Druck auf seine linke und rechte Seite zwei verschiedene Funktionen oder eine Verstellbewegung in zwei verschiedenen Richtungen. Das Fußschaltpult 13 ist über das vieladrige Kabel 17 mit der Umschalteinheit 18 verbunden, die wiederum mit dem Steuerpult 10 über das vieladrige Kabel 12 verbunden ist. (Die Umschalteinheit kann auch Teil des Steuerpultes sein.) Das Steuerpult 10 enthält eine Reihe von Wahltasten 11, welche sinnfällige kurze Bezeichnungen wie z.B. Fokus, Lampe oder ähnliches tragen. Bei ihrer Betätigung wird über die Umschalteinheit 18 der Fußschalter 14 auf die entsprechenden Leitungen 19 umgeschaltet, so daß bei seiner Betätigung die durch die Wahltasten 11 vorgesehene Funktion ausgeführt wird. Die Wahltasten 11 sind vorzugsweise als Leuchtdrucktasten ausgebildet, damit man am Steuerpult 10 sofort erkennen kann, welche Funktion eingeschaltet ist. Eine Doppelbetätigung der Wahltasten läßt sich in bekannter Weise mechanisch oder elektronisch verhindern.

Fig. 2 zeigt ein Ausführungsbeispiel bei dem das Fußschaltpult zwei Fußschalter 14 und 25 enthält, um z.B. die Verstellung eines Mikroskopes in zwei zueinander senkrechten Achsen durchzuführen. In diesem Fall ist beim Wechsel der Verstellachse keine Bedienung am Steuerpult 10 notwendig. Das ist immer dann von Vorteil, wenn häufig zwischen zwei Funktionen gewechselt werden muß. Bei dieser Ausführung kann darüber hinaus auch der Operateur wählen, ob die übrigen Funktionen mit dem waagerecht oder dem senkrecht angeordneten Fußschalter ausgeführt werden sollen.

Ein weiteres Ausführungsbeispiel zeigt Fig. 3. Hier dient ein dritter Fußschalter 36 dazu, zusätzlich die Umschalteinheit zu betätigen, so daß der Operateur nicht mehr auf die Hilfe einer Schwester angewiesen ist. Beim Druck auf den oberen Teil des Fußschalters wird die vorhergehende Funktion dem oder den anderen Fußschalter(n) zugeordnet; beim Druck auf den unteren Teil die folgende. Auch hier wird durch die leuchtenden Wahltasten 11 am Steuergerät 10 angezeigt, welche Funktion eingeschaltet ist, bzw. welche Funktionen eingeschaltet sind.

Schließlich kann die Umschalteinheit auch über einen bekannten Sprachanalysator bedient werden, der auf gesprochene Kommandowörter anspricht, deren Klangspektren in ihm gespeichert sind.

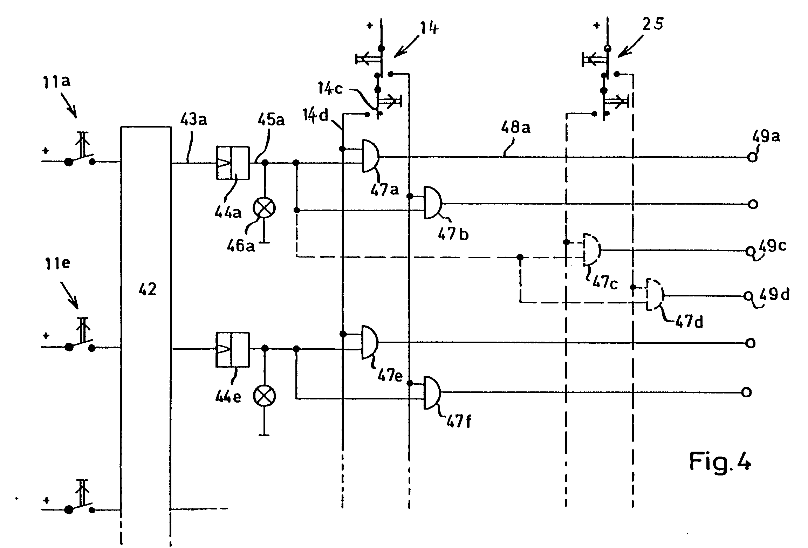

Eine mögliche Schaltung für die in Fig. 2 gezeigte Ausführungsform zeigt Fig. 4. In ihr sind mit 44a, 44e usw. elektronische Speicher bezeichnet, die z.B. aus Flip-Flips bestehen. Beim Druck auf eine der Vorwahltasten 11a, 11e usw. wird durch eine bekannte elektronische Schaltung 42 der zu ihr gehörende Speicher gesetzt und alle anderen Speicher werden zurückgesetzt. Die bekannte Schaltung 42 verhindert außerdem Doppelbetätigungen. Wenn z.B. die Taste 11a gedrückt wird, wird über die Leitung 43a der Speicher 44a gesetzt und über die Leitung 45a gelangt Spannung an die UND-Gatter 47a und 47b, während an den UND-Gattern 47e, 47f usw. keine Spannung liegt. Außerdem erhält die Lampe 46a Spannung; ihr Leuchten zeigt, daß (zuletzt) die Taste 11a gedrückt wurde. Wird nun z.B. der Kontakt 14c des Fußschalters 14 betätigt, dann gelangt über die Leitung 14d Spannung an die UND-Gatter 47a, 47e usw. Da nur beim UND-Gatter 47a beide Eingänge Spannung haben, gelangt nur über die Leitung 48a (und einen evtl. Verstärker) Spannung an den Punkt 49a und damit zu dem Betätigungsglied für die vorgewählte und betätigte Funktion.

Fig. 4 zeigt außerdem ein Beispiel für die Wirkungsweise von zwei Fußschaltern für zusammengehörende Funktionen. Wenn die Taste 11a gedrückt wurde, erhalten auch die UND-Gatter 47c und 47d Spannung, so daß bei Betätigung des Fußschalters 25 eine weitere Funktion über 49c und 49d ausgelöst werden kann, z.B. die Bewegung in zwei Richtungen auf einer weiteren Achse.

**Patentansprüche**

1. Fußschaltpult für Operationsmikroskope, mit einem oder mehreren Fußschaltern (14, 25) zum Betätigen zahlreicher Funktionen, von denen mindestens mehrere in ihren jeweiligen Zuständen gleichzeitig notwendig sind, gekennzeichnet durch eine Umschalteinrichtung (18), mit der die Funktionen des Fußschalters (14) bzw. der Fußschalter (14, 25) vorwählbar sind, und durch Leuchtanzeigen, die anzeigen, welche Funktion vorgewählt ist bzw. welche Funktionen vorgewählt sind.

2. Fußschaltpult nach Anspruch 1, dadurch gekennzeichnet, daß die Umschalteinrichtung (18) über ein Steuerpult (10) von Hand bedienbar ist.

3. Fußschaltpult nach Anspruch 1 oder 2, dadurch gekennzeichnet, daß die Umschalteinrichtung (18) durch einen weiteren Fußschalter (36) bedienbar ist.

4. Fußschaltpult nach Anspruch 1 oder 2, dadurch gekennzeichnet, daß die Umschalteinrichtung mit einem Sprachanalysator verbunden ist, der auf gesprochene Kommandowörter anspricht.

5. Fußschaltpult nach einem der Ansprüche 1 bis 4, dadurch gekennzeichnet, daß ein oder mehrere Fußschalter als Wippschalter ausgebildet sind.

6. Fußschaltpult nach einem der Ansprüche 1 bis 5, dadurch gekennzeichnet, daß ein oder mehrere Fußschalter gegenüber den anderen um 90° gedreht angeordnet sind.

7. Fußschaltpult für Operationsmikroskope, mit einem oder mehreren Fußschaltern (14, 25) zum Betätigen zahlreicher Funktionen, von denen mindestens mehrere in ihren jeweiligen Zuständen gleichzeitig notwendig sind, gekennzeichnet durch eine Umschalteinrichtung (18), mit der die Funktionen des Fußschalters (14) bzw. der Fußschalter (14, 25) vorwählbar sind, und durch einen Sprachanalysator, der auf gesprochene Kommandowörter anspricht und der mit der Umschalteinrichtung (18) verbunden ist.

8. Fußschaltpult nach Anspruch 7, dadurch gekennzeichnet, daß ein oder mehrere Fußschalter als Wippschalter ausgebildet sind.

9. Fußschaltpult nach Anspruch 7 oder 8, dadurch gekennzeichnet, daß ein oder mehrere Fußschalter gegenüber den anderen um 90° gedreht angeordnet sind.

**Revendications**

1. Pupitre de manoeuvre au pied pour un microscope d'opération comportant un ou plusieurs interrupteurs à pédales (14, 25) pour l'exécution de nombreuses fonctions, dont plusieurs au moins sont nécessaire dans leur condition respectif, caractérisé par un dispositif de commutation (18) au moyen duquel les fonctions de l'interrupteurs à pédales (14) ou bien des interrupteurs à pédales (14, 25) peuvent etre présélectionnées, et par des indicateurs lumineux (11), qui indiquent quelle fonction est présélectionnée ou bien quelles fonctions sont présélectionnées.

2. Pupitre de manoeuvre au pied selon la revendication 1, caractérisé en ce que le dispositif de commutation (18) peut être manoeuvré manuellement par l'intermédiaire d'un pupitre de commande (10).

3. Pupitre de manoeuvre au pied selon la revendication 1 ou 2, caractérisé en ce que le dispositif de commutation (18) peut être manoeuvré additionnellement par un autre interrupteur à pédale (36).

4. Pupitre de manoeuvre au pied selon la revendication 1 ou 2, caractérisé en ce que le dispositif de commutation est relié à un analyseur de parole qui réagit à des mots d'ordre prononcés.

5. Pupitre de manoeuvre au pied selon une des revendications 1 à 4, caractérisé en ce qu'un ou plusieurs interrupteurs à pédales sont agencés comme des interrupteurs basculants.

6. Pupitre de manoeuvre au pied selon une des revendications 1 à 5, caractérisé en ce qu'un ou plusieurs interrupteurs à pédales sont disposés en étant tournés de 90° par rapport aux autres.

7. Pupitre de manoeuvre au pied pour un microscope d'opération comportant un ou plusieurs interrupteurs à pédales (14, 25) pour l'exécution de nombreuses fonctions, dont plusieurs au moins sont nécessaires dans leur condition respectif, caractérisé par un dispositif de commutation (18) au moyen duquel les fonctions de l'interrupteur à pédale (14) ou des interrupteurs à pédales (14, 25) peuvent etre présélectionnées, et par un analyseur de parole qui réagit à des mots d'ordre prononcés et qui est relié au dispositif de commutation.

8. Pupitre de manoeuvre au pied selon la revendication 7, caractérisé en ce qu'un ou plusieurs interrupteurs à pédales sont agencés comme des interrupteurs basculants.

9. Pupitre de manoeuvre au pied selon la revendication 7 ou 8, caractérisé en ce qu'un ou plusieurs interrupteurs à pédales sont disposés en étant tournés de 90° par rapport aux autres.

**Claims**

1. A foot-operated switchboard for operation microscopes, having one or more foot-operated switches (14, 25) for actuating numerous functions, of which at least several are necessary in their respective conditions simultaneously, characterized by a change-over device (18) by means of which the functions of the foot-operated switch (14) or the foot operated switches (14, 25) can be preselected and by pilot lights (11) which indicate what function is preselected or what functions are preselected.

2. A foot-operated switchboard according to claim 1, characterized by the fact that the change-over device (18) can be operated manually via a control board (10).

3. A foot-operated switchboard according to claim 1 or 2, characterized by the fact that the change-over device (18) can also be operated by another foot-operated switch (36).

4. A foot-operated switchboard according to claim 1 or 2, characterized by the fact that the change-over device is connected with a speech analyzer which responds to spoken command words.

5. A foot-operated switchboard according to one of claims 1 to 4, characterized by the fact that one or more foot-operated switches are developed as rocker-type switches.

6. A foot-operated switchboard according to one of claims 1 to 5, characterized by the fact that one or more foot-operated switches are arranged at an angle of 90° to the others.

7. A foot-operated switchboard for operation microscopes, having one or more foot-operated switches (14, 25) for actuating numerous functions, of which at least several are necessary in their respective conditions simultaneously, characterized by a change-over device (18) by means of which the functions of the foot-operated switch (14) or the foot operated switches (14, 25) can be preselected and by a speech analyzer which responds to spoken command words and which is connected with the change-over device.

8. A foot-operated switchboard according to claim 7, characterized by the fact that one or more foot-operated switches are developed as rocker-type switches.

9. A foot-operated switchboard according to claim 7 or 8, characterized by the fact that one or more foot-operated switches are arranged at an angle of 90° to the others.

# Fig.1

# Fig.2

# Fig.3

Fig.4

EP 0 048 852 B2